# EUROPEAN PATENT SPECIFICATION

(11) **EP 3 951 176 B1**
(45) Date of publication and mention of the grant of the patent: **04.09.2024**
(21) Application number: 20776408.5
(22) Date of filing: 26.02.2020
(51) Int. Cl.: F04B 39/00, C01B 32/05, C01B 32/20, C21D 5/00, C22C 37/04, C22C 38/04, F04C 18/356, F04C 29/00, C21D 1/18, C21D 9/00

(54) **SEALED COMPRESSOR AND REFRIGERATION CYCLE DEVICE**
ABGEDICHTETER KOMPRESSOR UND KÜHLKREISVORRICHTUNG
COMPRESSEUR HERMÉTIQUE ET DISPOSITIF À CYCLE DE RÉFRIGÉRATION

(30) Priority: 26.03.2019 JP 2019058928
(43) Date of publication of application: 09.02.2022
(73) Proprietor: Carrier Japan Corporation, Tokyo 141-0032 (JP)
(72) Inventor: ATOBE, Shohei, Fuji-shi, Shizuoka 416-8521 (JP); WATANABE, Norihisa, Fuji-shi, Shizuoka 416-8521 (JP); AOKI, Toshimasa, Fuji-shi, Shizuoka 416-8521 (JP); YAMAZAKI, Tadayuki, Fuji-shi, Shizuoka 416-8521 (JP)
(74) Representative: Gramm, Lins & Partner Patent- und Rechtsanwälte PartGmbB
(86) International application number: PCT/JP2020/007807
(87) International publication number: WO 2020/195490

(56) References cited:
- WO-A1-2012/032765
- CN-C- 1 211 582
- JP-A- 2004 278 391
- JP-A- 2007 245 234
- JP-A- 2010 101 232
- JP-A- 2017 031 830
- JP-A- 2017 031 831
- JP-A- H07 259 772
- JP-A- H11 101 189
- US-A1- 2010 263 404
- US-A1- 2013 118 652
- US-B2- 8 034 751

## Description

### Technical Field

Embodiments described herein relate generally to a sealed compressor and a refrigeration cycle device.

### Background Art

A refrigeration cycle device such as an air conditioner for cooling and heating a room, a refrigerator, a refrigeration showcase or a heat pump water heater incorporates a sealed compressor therein, and circulates a refrigerant such as an HFC-based refrigerant or a natural refrigerant such as an HC based or CO₂ refrigerant.

The sealed compressor comprises a sealed container, an electric motor part housed in the sealed container, and a compression mechanism part connected to the electric motor part via a rotary shaft. A cylinder is provided in the compression mechanism part. A roller is arranged in the cylinder, and the tip of a blade elastically contacts the peripheral surface of the roller. When the roller is driven and rotated by the electric motor part via the shaft, the roller and the blade slide with each other. Since these sliding members are slid with each other, the wear resistance of their sliding surfaces needs to be improved.

JP 5113902 B discloses a sealed compressor comprising a compression mechanism part. At least one of sliding members of the compression mechanism part, for example, a blade is formed of tool steel. On the sliding surface of the tip of the blade with a roller, a single layer of chromium, a chromium and tungsten carbide alloy layer, an amorphous carbon layer containing tungsten, and an amorphous carbon layer containing carbon and hydrogen without containing metal are stacked in this order from the surface of the substrate of the tool steel. The document US 2013 118652 discloses a compressor which sliding parts provide a predetermined hardness and carbon percentage within the material.

### Disclosure of Invention

However, according to the sealed compressor described in the above publication, for example, if one-sided contact occurs during the sliding of the roller and the blade, sufficient wear resistance may not be ensured.

The present invention provides a sealed compressor capable of ensuring wear resistance even in a sliding environment in which a first member and a second member sliding with each other of a compression mechanism part, for example, a blade and a roller are in a one-sided contact state, and a refrigeration cycle device comprising the compressor.

According to one embodiment, there is provided a sealed compressor comprising a compression mechanism part compressing a refrigerant in a sealed container, and a refrigerator oil. The compression mechanism part comprises a first member and a second member sliding with each other. The first member is a substrate which is made of iron-based metal and has a diamond-like carbon film on a surface of the substrate. The second member is formed of cast iron with magnesium added, has an amount of carbide precipitation on a sliding surface with the first member of less than or equal to 5% in area ratio, and has a Rockwell hardness (HRC) of greater than or equal to 40 but less than or equal to 55.

### Brief Description of Drawings

FIG. 1 is a schematic view showing a refrigeration cycle device according to an embodiment.
FIG. 2 is a perspective view showing a second roller and a blade of a second cylinder chamber of FIG. 1.
FIG. 3 is an illustration showing the relationship between the amount of carbide precipitation on a sliding surface of the roller with the blade and the amount of wear of a diamond-like carbon film (DLC film) of the blade when the roller and the blade are slid with each other in Example 1.
FIG. 4 is an illustration showing the relationship between the change in the Rockwell hardness (HRC) of the roller and the amount of wear of the roller and the amount of wear of the DCL film of the blade when the roller and the blade are slid with each other in Example 2.
FIG. 5 is an illustration showing changes in the amount of wear of a coating film of the blade when the roller and the blade are slid with each other in Example 3 and Comparative Examples 1 and 2.
FIG. 6 is an illustration showing the relationship between the content of an extreme pressure additive in a refrigerator oil and the amount of wear of the DLC film of the blade in Example 5.

Mode for Carrying Out the Invention Embodiments will be described hereinafter with reference to the accompanying drawings.

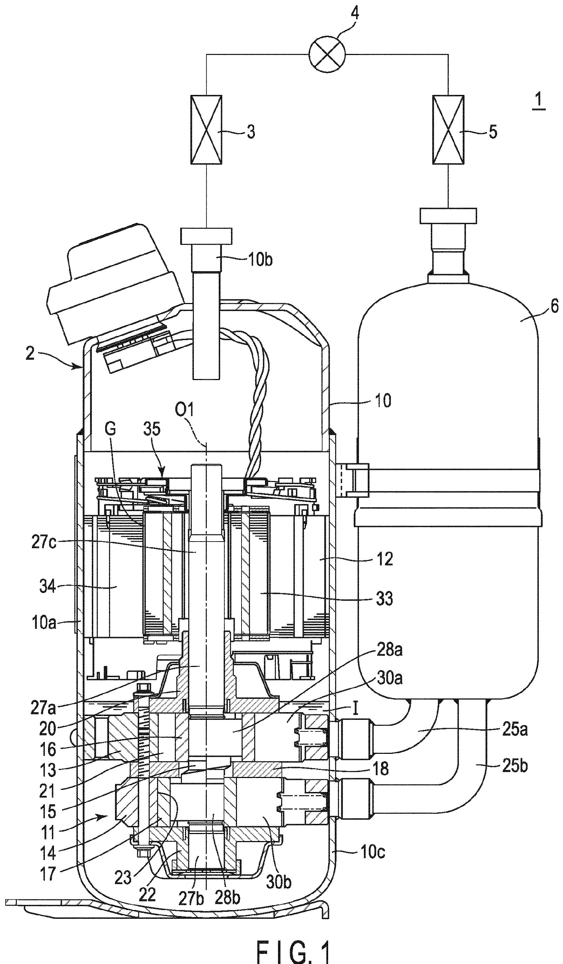

FIG. 1 is a schematic view showing a refrigeration cycle device 1 according to an embodiment. The refrigeration cycle device 1 comprises a sealed compressor 2, a condenser 3, an expander 4 and an evaporator 5. A refrigerant is circulated from the discharge side of the sealed compressor 2 to the suction side of the sealed compressor 2 via the condenser 3, the expander 4, the evaporator 5 and an accumulator 6.

The sealed compressor 2 is, for example, a vertical rotary compressor, and comprises a sealed container 10, a compression mechanism part 11 and an electric motor part 12 as main components.

The sealed container 10 has a cylindrical peripheral wall 10a, and is raised along the vertical direction. A discharge pipe 10b is provided at the upper end of the sealed container 10. The discharge pipe 10b is connected to the condenser 3. In addition, an oil reservoir part 10c which stores a refrigerator oil I for lubricating the compression mechanism part 11 is provided in the lower part of the sealed container 10.

The compression mechanism part 11 is housed in the lower part of the sealed container 10 such that the compression mechanism part 11 is immersed in the refrigerator oil I. The compression mechanism part 11 has a twin cylinder structure, and comprises a first cylinder 13, a second cylinder 14, a rotary shaft 15, a first roller 16, a second roller 17, a first blade 30a and a second blade 30b as main components.

The first cylinder 13 is fixed to the inner peripheral surface of the peripheral wall 10a of the sealed container 10. The second cylinder 14 is fixed to the lower surface of the first cylinder 13 via an intermediate partition plate 18.

A first bearing 20 is fixed to the upper surface of the first cylinder 13. The first bearing 20 covers the inner diameter part of the first cylinder 13 from above, and protrudes toward above the first cylinder 13. A space enclosed by the inner diameter part of the first cylinder 13, the intermediate partition plate 18 and the first bearing 20 constitute a first cylinder chamber 21. The intermediate partition plate 18 and the first bearing 20 are the closing members of the first cylinder chamber 21.

A second bearing 22 is fixed to the lower surface of the second cylinder 14. The second bearing 22 covers the inner diameter part of the second cylinder 14 from below, and protrudes toward below the second cylinder 14. A space enclosed by the inner diameter part of the second cylinder 14, the intermediate partition plate 18 and the second bearing 22 constitute a second cylinder chamber 23. The intermediate partition plate 18 and the second bearing 22 are the closing members of the second cylinder chamber 23. The first cylinder chamber 21 and the second cylinder chamber 23 are located coaxially with respect to a central axis O1 of the sealed container 10.

As shown in FIG. 1, the first cylinder chamber 21 and the second cylinder chamber 23 are connected to the accumulator 6 via suction pipes 25a and 25b. The gas-phase refrigerant separated from the liquid-phase refrigerant in the accumulator 6 is guided to the first cylinder chamber 21 and the second cylinder chamber 23 through the suction pipes 25a and 25b.

The rotary shaft 15 is coaxially located on the central axis O1 of the sealed container 10, and penetrates the first cylinder chamber 21, the second cylinder chamber 23 and the intermediate partition plate 18. The rotary shaft 15 has a first journal part 27a, a second journal part 27b and a pair of eccentric parts 28a and 28b. The first journal part 27a is rotatably supported by the first bearing 20. The second journal part 27b is rotatably supported by the second bearing 22.

Furthermore, the rotary shaft 15 has a connecting part 27c coaxially extending from the first journal part 27a. A rotor 33 of the electric motor part 12 is firmly attached to the connecting part 27c.

The eccentric parts 28a and 28b are located between the first journal part 27a and the second journal part 27b. The eccentric parts 28a and 28b have a phase difference of, for example, 180 degrees, and have the same amount of eccentricity with respect to the central axis O1 of the sealed container 10. One eccentric part 28a is housed in the first cylinder chamber 21. The other eccentric part 28b is housed in the second cylinder chamber 23.

The ring-shaped first roller 16 is fitted to the outer peripheral surface of the one eccentric part 28a. When the rotary shaft 15 rotates, the first roller 16 rotates eccentrically in the first cylinder chamber 21, and a part of the outer peripheral surface of the first roller 16 slidably makes line contact with the inner peripheral surface of the first cylinder chamber 21 via an oil film.

The ring-shaped second roller 17 is fitted to the outer peripheral surface of the other eccentric part 28b. When the rotary shaft 15 rotates, the second roller 17 rotates eccentrically in the second cylinder chamber 23, and a part of the outer peripheral surface of the second roller 17 slidably makes line contact with the inner peripheral surface of the second cylinder chamber 23 via an oil film.

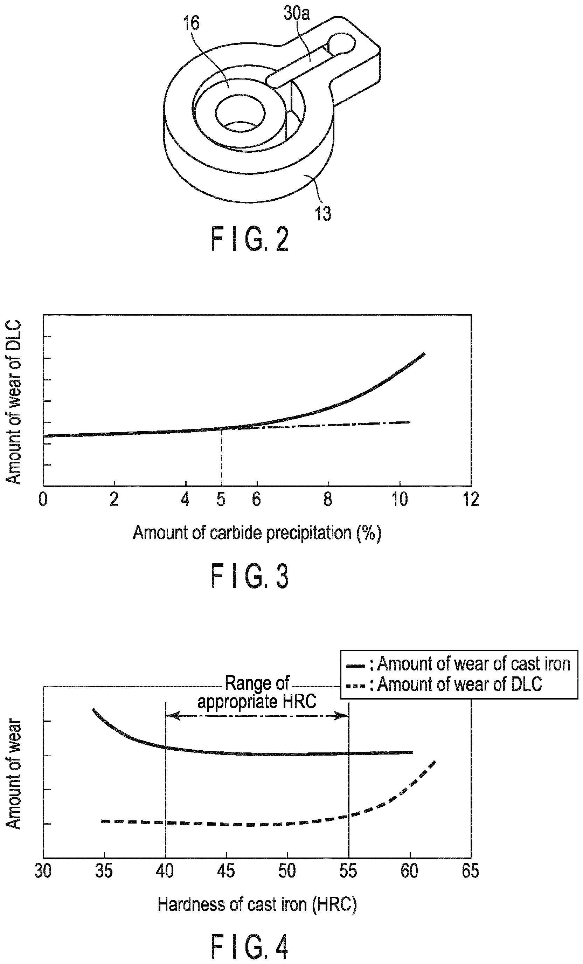

As shown in FIG. 2, the first blade 30a is supported by the first cylinder 13. The tip of the first blade 30a is slidably pressed against the outer peripheral surface of the first roller 16. The first blade 30a cooperates with the first roller 16, and partitions the first cylinder chamber 21 into a suction region and a compression region. In addition, the first blade 30a follows the eccentric motion of the first roller 16, and moves in a direction of protruding into the first cylinder chamber 21 or retreating from the first cylinder chamber 21. This operation of the first blade 30a changes the volumes of the suction region and the compression region of the first cylinder chamber 21, and compresses the gas-phase refrigerant sucked from the suction pipe 25a into the first cylinder chamber 21.

The second blade 30b is supported by the second cylinder 14. The tip of the second blade 30b is slidably pressed against the outer peripheral surface of the second roller 17. The second blade 30b and the second roller 17 cooperate with each other in the same manner as the first blade 30a and the first roller 16. Therefore, when the second roller 14 moves eccentrically in the second cylinder chamber 23, the volumes of the suction region and the compression region of the second cylinder chamber 23 are changed, and the gas-phase refrigerant sucked from the suction pipe 25b into the second cylinder chamber 23 is compressed.

The high-temperature and high-pressure gas-phase refrigerant compressed in the first cylinder chamber 21 and the second cylinder chamber 23 is discharged into the sealed container 10 via an unillustrated discharge valve mechanism. The discharged gas-phase refrigerant rises in the sealed container 10.

The electric motor part 12 is housed in the intermediate part along the axial direction of the sealed container 10 such that the electric motor part 12 is located between the compression mechanism part 11 and the discharge pipe 10b as shown in FIG. 1. The electric motor part 12 is what is called an inner roller type motor, and comprises the rotor 33 and a stator 34.

At the upper end of the rotator 33 of the electric motor part 12, a centrifugal oil separator 35 which separates the refrigerator oil I contained in the gas-phase refrigerant in the sealed container 10 is installed.

Next, the materials and physical properties of the first member (for example, first and second blades 30a and 30b) and the second member (for example, first and second rollers 16 and 17) sliding with each other, the shaft (rotary shaft 15) and the closing members, which constitute the compression mechanism part 11 of the sealed compressor 2 described above, will be described in detail.

The first member (for example, the first and second blades 30a and 30b) has a structure in which the surface of a substrate made of iron-based metal is coated with a diamond-like carbon film (DLC film).

The iron-based metal is metal which is primarily composed of iron, and contains carbon and metal other than iron such as Cr, Ni, Mn or Si. Preferred iron-based metal is high-speed tool steel (SKH steel), specifically, tungsten-based SKH2 to SKH4, etc., or molybdenum-based SKH50 to SKH59, etc. In addition, SKD11 (alloy steel, die steel) can also be used.

Examples of diamond-like carbon (DLC) are hydrogen-free DLC, hydrogen-containing DLC, and Si-containing DLC.

The DLC film may be formed on at least the sliding surface of the substrate with the second member. It is preferable that the DLC film should have a thickness of greater than or equal to 1 µm but less than or equal to 3 µm.

It is preferable that the DLC film should have a base layer between it and the substrate in order to improve adhesion to the substrate. It is preferable that the base layer should be composed of a first layer made of a single layer of chromium, a second layer made of a chromium-tungsten carbide alloy layer, and a third layer made of a metal-containing amorphous carbon layer containing at least one of tungsten and tungsten carbide from the surface side of the substrate. It is preferable that the second layer should have a concentration gradient of chromium and tungsten carbide, and the content of chromium should be higher on the first layer side than on the third layer side and the content of tungsten carbide should be higher on the third layer side than on the first layer side. It is preferable that the third layer should have a concentration gradient of tungsten or tungsten carbide, and the content of tungsten or tungsten carbide should be higher on the second layer side than on the DLC film side.

The second member (for example, the first and second rollers 16 and 17) is formed of cast iron with magnesium added, and the amount of carbide precipitation on the sliding surface with the first member is less than or equal to 5% in area ratio. In addition, the second member has a Rockwell hardness (HRC) of greater than or equal to 40 but less than or equal to 55.

The addition of magnesium serves to spheroidize carbon in cast iron, and the amount of magnesium added is preferably greater than or equal to 0.02% by weight but less than or equal to 0.1% by weight. It is preferable that the magnesium-added cast iron should contain at least greater than or equal to 0.02% by weight but less than or equal to 0.1% by weight of magnesium, greater than or equal to 2.0% by weight but less than or equal to 5.0% by weight of carbon, and less than or equal to 0.05% by weight of phosphorus, and the rest should be iron.

In the second member, the amount of carbide precipitation (area ratio) on the sliding surface with the first member means a value obtained by specifying a measurement field of view of an area of (0.9 to 1.5 mm) × (1.2 to 2.0 mm) from a photograph of the sliding surface with the first member taken at a magnification of greater than or equal to 100 times but less than or equal to 200 times and determining the amount of carbide precipitated in the field of view in terms of area ratio. The precipitated carbide is, for example, cementite. If the amount of carbide precipitation of the second member exceeds 5% in area ratio, the amount of wear of the diamond-like carbon film (DLC film) of the first member may increase during the sliding of the first member and the second member. In addition, non-uniform contact (one-sided contact) in the axial direction may occur between the sliding surfaces of the first member and the second member. In the second member, the amount of carbide precipitation on the sliding surface with the first member is preferably less than or equal to 2% in area ratio.

The Rockwell hardness (HRC) of the second member can be determined by a test specified in JIS G2245. The Rockwell hardness (HRC) of the second member is set to greater than or equal to 40 but less than or equal to 55 so that adaptive wear is more likely to occur during the sliding with the DLC film of the first member. As a result, localized abnormal wear of the second member can be prevented, and high long-term reliability can be realized. If the Rockwell hardness (HRC) is set to less than 40, wear is likely to progress on the sliding surface of the second member. On the other hand, if the Rockwell hardness (HRC) exceeds 55, adaptive wear is less likely to occur during the sliding with the DLC film of the first member. Therefore, the surface pressure locally increases, and abnormal wear occurs. The Rockwell hardness (HRC) of the second member is more preferably greater than or equal to 45 but less than or equal to 50.

The second member can have a Rockwell hardness (HRC) of greater than or equal to 40 but less than or equal to 55 by, for example, the following heat treatment. That is, after heating and holding at 880°C for one hour, quenching is performed so that a martensitic structure is obtained. After that, tempering which is a process of reheating at a temperature of greater than or equal to 250°C but less than or equal to 500°C and holding for two hours is performed so that the martensitic structure is tempered. The tempering temperature is preferably greater than or equal to 400°C but less than or equal to 500°C, and is more preferably greater than or equal to 430°C but less than or equal to 470°C. Sub-zero treatment (also referred to as deep cooling) can also be performed after quenching. Here, deep cooling is a process of cooling at a temperature of less than or equal to 0°C after quenching.

It is preferable that the shaft should be made of spheroidal graphite cast iron in which graphite is crystallized in a spherical shape and which has excellent lubricity and high rigidity (high Young's modulus).

It is preferable that the intermediate partition plate 18, the first bearing 20, and the second bearing 22, which are the closing members, should be made of flake graphite cast iron in which graphite is crystallized in a fine flake form as compared with spheroidal graphite cast iron.

It should be noted that any of the first member (for example, the blade), the shaft and the closing members which slide with the second member (for example, the roller) may have its sliding surface coated with a solid lubricant such as manganese phosphate or molybdenum disulfide, for example.

Examples of the refrigerator oil I which lubricates the compression mechanism part 11 are polyol ester oil, polyvinyl ether oil, polyalkylene glycol oil, and mineral oil. It is preferable that the refrigerator oil should not contain any extreme pressure additive or the extreme pressure additive, if any, should be less than or equal to 0.5% by weight. For example, tricresylphosphate can be used as the extreme pressure additive. When the refrigerator oil contains an extreme pressure additive, smaller is better, and the amount of the extreme pressure additive is preferably less than or equal to 0.3% by weight and is more preferably less than or equal to 0.1% by weight.

The refrigerant used in the sealed compressor is preferably a chlorine-free refrigerant, and examples are R448A, R449A, R449B, R407G, R407H, R449C, R456A, R516A, R460B, R463A, R744, and HC-based refrigerants.

The sealed compressor according to the above embodiment comprises the compression mechanism part which compresses the refrigerant in the sealed container, and the compression mechanism part comprises the first member, for example, the blade and the second member, for example, the roller which slide with each other. The blade has a structure in which the surface of the substrate made of iron-based metal is coated with the diamond-like carbon film (DLC film). The roller which slides with the DLC film of the blade is formed of cast iron with magnesium added, and the amount of carbide precipitation on the sliding surface with the DLC film of the blade is specified to less than or equal to 5% in area ratio. According to these configurations, the wear of the DLC film of the blade can be suppressed, the roller itself can cause appropriate adaptive wear, and the surface pressure on the DLC film of the blade can be reduced. Furthermore, the Rockwell hardness (HRC) of the roller is specified to greater than or equal to 40 but less than or equal to 55 so that the relationship between the amount of wear of the DLC film and the amount of adaptive wear of the roller (which is larger than the amount of wear of the DLC film) can be maintained in an appropriate state during the sliding with the DLC film of the blade.

Therefore, in the first member and the second member which slide with each other, for example, in the blade and the roller, the coating film on the surface of the substrate of the blade is specified to an DLC film, the roller is formed of magnesium-added cast iron, and the amount of carbide precipitation (area ratio) on the sliding surface with the DLC film of the blade and the HRC are specified to specific ranges so that wear characteristics, etc., occurring between these components can be optimized and abnormal wear caused by one-sided contact between the DLC film of the blade and the roller can be prevented. As a result, the sealed compressor which can compress the refrigerant in the sealed container with high stability and reliability over a long period of time can be provided.

In addition, since the extreme pressure additive of the refrigerator oil which lubricates the compression mechanism part has a function of preventing wear, in the second member (roller) which slides with the DLC film of the first member (blade), the adaptive wear of the second member is inhibited. In one embodiment, the refrigerator oil does not contain any extreme pressure additive or the extreme pressure additive is set to less than or equal to 0.5% by weight so that the adaptive wear of the roller can be developed and the abnormal wear between the sliding surfaces of the DLC film of the blade and the roller can be prevented.

Since chlorine contained in the refrigerant acts as an extreme pressure additive, that is, has a function of preventing wear, in the second member (roller) which slides with the DLC film of the first member (blade), the adaptive wear of the second member is inhibited. Therefore, in one embodiment, a refrigerant which does not contain chlorine is used so that the adaptive wear of the roller can be developed and the abnormal wear between the sliding surfaces of the DLC film of the blade and the roller can be prevented.

In one embodiment, the first member is applied to the blade and the second member is applied to the roller as the sliding members having the most severe lubrication environment in the rotary compressor so that the compressor having excellent long-term reliability can be provided.

In one embodiment, the shaft and the closing members of the cylinder chamber which slide with the roller are further provided, and the roller is formed of cast iron with magnesium added, and the amount of carbide precipitation (area ratio) on the sliding surface with the DLC film of the blade and the HRC are specified to specific ranges so that the roller causes appropriate adaptive wear during the sliding with the DLC film, and the surface pressure is reduced. In addition, the shaft which slides with the inner peripheral surface of the roller is formed of spheroidal graphite cast iron having a high Young's modulus so that the rigidity of the shaft (suppression of runout) can be increased and the inclination of the roller engaging with the shaft can be suppressed, and one-sided contact with the DLC film of the blade can be suppressed. Furthermore, the closing members which slide with the upper and lower end faces of the roller are formed of flake graphite cast iron in which graphite is crystallized in a fine form and oil retention is improved as compared with spheroidal graphite cast iron so that oil film breakage at the sliding surfaces of the closing members and the roller can be suppressed, and the wear of the roller end surfaces which slide with the closing members can be prevented. According to these effects, a compressor having excellent long-term reliability can be realized.

Next, examples of the present invention will be described in detail.

The amount of carbide precipitation (area ratio) of the roller described in the following examples was determined by photographing the sliding surface with the blade at a magnification of 150 times, specifying a measurement field of view of an area of 1.2 mm × 1.6 mm from the photograph, and determining the amount of carbide precipitated in the field of view.

### (Example 1)

A first member, for example, a blade composed of a substrate made of SKH51 and having a Rockwell hardness (HRC) of 63 and a diamond-like carbon film (DLC film) having a thickness of 2 µm and coating the surface of the substrate by the CVD method was produced.

In addition, a second member, for example, a roller composed of spheroidal graphite cast iron in which Mg constitutes 0.035% by weight, C constitutes 3.49% by weight, Si constitutes 2.78% by weight, Mn constitutes 0.45% by weight, P constitutes 0.016% by weight, S constitutes 0.007% by weight, and Fe constitutes the rest, and having a Rockwell hardness (HRC) of 45 was produced. In this roller, the amount of phosphorus (P) which is a component of spheroidal graphite cast iron was adjusted, and the amount of carbide precipitation on the sliding surface with the blade was thereby changed from 0 to 11% in area ratio.

The obtained blade and roller were incorporated into the compression mechanism part of the rotary compressor. In addition, R410A was used as the refrigerant and polyol ester oil was used as the refrigeration machine oil, and the operation was performed for 500 hours under a high compression ratio condition, and the amount of wear of the DLC film of the blade was determined. Here, the specific high compression ratio condition is Pd (discharge pressure)/Ps (suction pressure) = 2.6 MPa/0.12 MPa. The results are shown in FIG. 3.

As is clear from FIG. 3, when the roller having an amount of carbide precipitation exceeding 5% in area ratio was used, during the sliding of the blade and the roller, the amount of wear of the DLC film increased, and non-uniform contact (one-sided contact) in the axial direction was observed between the sliding surfaces of the blade and the roller.

On the other hand, when the roller having an amount of carbide precipitation of less than or equal to 5% in area ratio was used, during the sliding of the blade and the roller, the amount of wear of the DLC film did not increase, and one-sided contact could be remarkably prevented.

### (Example 2)

A roller made of the same cast iron as Example 1, having an amount of carbide precipitation on a sliding surface with a blade of 2% in area ratio, and having a Rockwell hardness (HRC) changing from 30 to 65 by adjusting the heating condition was produced. The roller was incorporated into the compression mechanism part of the rotary compressor together with the same blade as Example 1, and the amount of wear of the DLC film of the blade and the amount of wear of the roller were determined under the same operation condition. The results are shown in FIG. 4.

As is clear from FIG. 4, when the roller having a hardness (HRC) in a range of greater than or equal to 40 but less than or equal to 55 was used, during the sliding of the blade and the roller, the amount of wear of the DLC film of the blade and the amount of wear of the roller did not increase but could be maintained constant, and one-sided contact could be remarkably prevented.

### (Example 3)

A roller made of the same cast iron as Example 1, having an amount of carbide precipitation on a sliding surface with a blade of 2% in area ratio, and having a Rockwell hardness (HRC) of 45 was produced.

### (Comparative Example 1)

A roller was produced from spheroidal graphite cast iron (JIS G 5502:2001).

### (Comparative Example 2)

A roller was produced from monichrome cast iron, that is, special alloy cast iron in which Mo, Ni and Cr are added to spheroidal graphite cast iron [JIS G 5501: 1995].

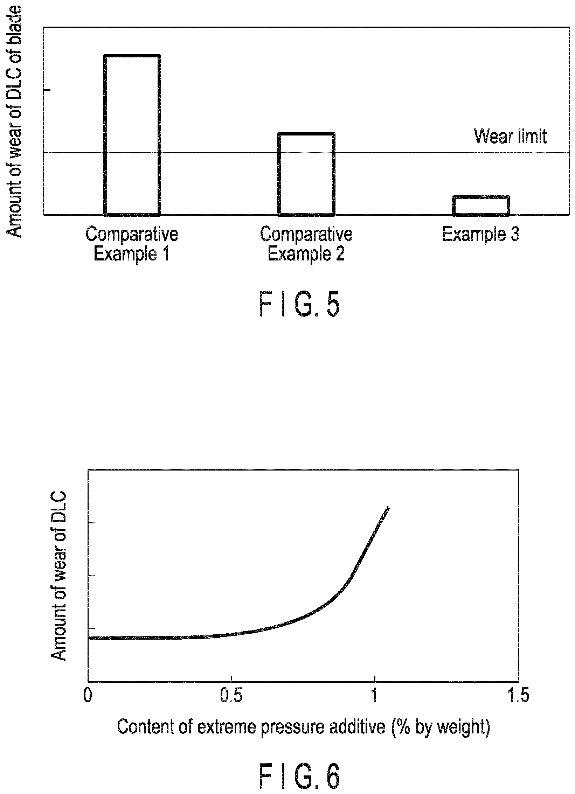

Each of the obtained rollers of Example 3 and Comparative Examples 1 and 2 was incorporated into the refrigerator of the rotary compressor together with the same blade as Example 1, and the amount of wear of the DLC film coating the surface of the substrate of the blade was determined under the same operation condition as Example 1. The results are shown in FIG. 5. In FIG. 5, the wear limit is a value at which the DLC film on the surface of the substrate is worn and the surface of the substrate is exposed.

As is clear from FIG. 5, in the sliding combination of the roller of Example 3 and the DLC film of the blade, the amount of wear of the DLC film was remarkably reduced, and was sufficiently below the wear limit.

On the other hand, in the sliding combination of the roller made of monochrome cast iron of Comparative Example 2 and the DLC film of the blade, the amount of wear of the DLC film was high and exceeded the wear limit as shown in FIG. 5.

In addition, in the sliding combination of the roller made of spheroidal graphite cast iron of Comparative Example 1 and the DLC film of the blade, the amount of wear of the DLC film was extremely high and greatly exceeded the wear limit as shown in FIG. 5.

### (Example 4)

A blade was produced by coating the surface of a substrate made of SKH51 and having a Rockwell hardness (HRC) of 63 with a diamond-like carbon film (DLC film) having a Vickers hardness (Hv) of 2500 and having a thickness of 2.5 µm by the CVD method.

### (Comparative Example 3)

A blade was produced by nitriding the surface of a substrate made of SUS440C and having a Rockwell hardness (HRC) of 36 to form a nitride film having a Vickers hardness (Hv) of 1000 and having a thickness of 8 µm.

### (Comparative Example 4)

A blade was produced by coating the surface of a substrate made of SKH51 and having a Rockwell hardness (HRC) of 63 with a CrN film having a Vickers hardness (Hv) of 1200 and having a thickness of 2 µm by the CVD method.

Each of the obtained blades of Example 4 and Comparative Examples 3 and 4 was incorporated with the same roller as Example 3 into the refrigerator of the rotary compressor in the same manner as Example 1, and the wear resistance of the coating film on the surface of the blade was evaluated under the same operation condition as Example 1.

As a result, when the blade of Example 4 in which the surface of the substrate made of SKH51 is coated with the DLC film was slid with the roller having an amount of carbide precipitation on a sliding surface of 2% in area ratio and having an HRC of 45, the wear mount of the DLC film was small, and the wear resistance was high.

On the other hand, when the blade of Comparative Example 3 in which the substrate of SUS440C is nitrided to form the nitride film and the blade of Comparative Example 4 in which the surface of the substrate of SKH51 is coated with the CrN film were slid with the same roller as Example 4, the wear of the nitride film of the blade and the wear of the CrN film of the blade were larger than that of the DLC film of Example 4.

Based on the evaluation results of the comparison of different roller materials as the counterpart with respect to the DLC film of the blade between Example 3 and Comparative Examples 1 and 2, and the comparison of different coating films on the surface of the blade as the counterpart with respect to the roller material (having a specific amount of carbide precipitation and having a specific Rockwell hardness (HRC)) between Example 4 and Comparative Examples 3 and 4, the combination of the DLC film coating the surface of the blade and the roller made of magnesium-added cast iron, having an amount of carbide precipitation on a sliding surface of less than or equal to 5% in area ratio, and having a Rockwell hardness (HRC) of greater than or equal to 40 but less than or equal to 55 can optimize the wear of the DLC film and the adaptive wear of the roller and achieve an effect of preventing abnormal wear caused by one-sided contact between the DLC film and the roller.

### (Example 5)

Polyol ester oil which is a refrigeration machine oil containing 0%, 0.1%, 0.3%, 0.5%, 0.6%, 0.7%, 0.8%, 0.9% or 1.0% by weight of tricresylphosphate which is an extreme pressure additive was used, and the same blade as Example 1 and a roller made of the same cast iron as Example 1, having an amount of carbide precipitation on a sliding surface with the blade of 2% in area ratio, and having an HRC of 45 were incorporated into the compression mechanism part of the rotary compressor, and the amount of wear of the DLC film of the blade was determined under the same operating condition as Example 1. The results are shown in FIG. 6.

As is clear from FIG. 6, the wear of the DLC film of the blade can be suppressed by using polyol ester oil which is a refrigeration machine oil in which the content of tricresylphosphate which is an extreme pressure additive is less than or equal to 0.5% by weight.

### Industrial Applicability

The present invention can provide a sealed compressor capable of ensuring wear resistance even in a sliding environment in which a first member and a second member sliding with each other of a compression mechanism part, for example, a blade and a roller are in a one-sided contact state.

## Claims

1. A sealed compressor comprising:
a compression mechanism part compressing a refrigerant in a sealed container; and
a refrigerator oil, wherein
the compression mechanism part comprises a first member and a second member sliding with each other, **characterised in that** the first member is a substrate which is made of iron-based metal and has a diamond-like carbon film on a surface of the substrate and
the second member is formed of cast iron with magnesium added, has an amount of carbide precipitation on a sliding surface with the first member of less than or equal to 5% in area ratio, and has a Rockwell hardness (HRC) of greater than or equal to 40 but less than or equal to 55.

2. The sealed compressor of claim 1, wherein the refrigerator oil does not contain an extreme pressure additive or contains less than or equal to 0.5% by weight of an extreme pressure additive.

3. The sealed compressor of claim 1, wherein the refrigerant does not contain chlorine.

4. The sealed compressor of claim 1, wherein the compression mechanism part comprises a cylinder forming a cylinder compartment in an inner diameter part, a roller provided in the cylinder compartment, a blade having a tip pressed against an outer peripheral surface of the roller and partitioning the cylinder compartment into a suction region and a compression region, a shaft penetrating the cylinder compartment and eccentrically rotating the roller, and a closing member closing the cylinder compartment,
the first member is the blade, and
the second member is the roller.

5. The sealed compressor of claim 4, wherein the shaft is formed of spheroidal graphite cast iron, and the closing member is formed of flake graphite cast iron.

6. A refrigeration cycle device comprising the sealed compressor of any one of claims 1 to 5, a heat radiator, an expander, and a heat absorber.

## Patentansprüche

1. Ein abgedichteter Kompressor, bestehend aus:
einen Kompressionsmechanismus, der ein Kältemittel in einem abgedichteten Behälter komprimiert; und
ein Kältemaschinenöl, wobei
der Kompressionsmechanismus ein erste und ein zweites Teil umfasst, die miteinander gleiten,
**dadurch gekennzeichnet, dass**
das erste Teil ein Substrat ist, das aus einem Metall auf Eisenbasis hergestellt ist und eine diamantartige Kohlenstoffschicht auf einer Oberfläche des Substrats aufweist, und
das zweite Element aus Gusseisen mit Magnesiumzusatz besteht, eine Menge an Karbidausscheidungen auf einer Gleitfläche mit dem ersten Element von weniger als oder gleich 5% im Flächenverhältnis aufweist und eine Rockwell-Härte (HRC) von mehr als oder gleich 40, aber weniger als oder gleich 55 aufweist.

2. Der abgedichtete Kompressor nach Anspruch 1, wobei das Kältemaschinenöl kein Extremdruckadditiv oder weniger als oder gleich 0,5% nach Gewicht eines Extremdruckadditivs enthält.

3. Abgedichteter Verdichter nach Anspruch 1, wobei das Kältemittel kein Chlor enthält.

4. Abgedichteter Kompressor nach Anspruch 1, wobei der Kompressionsmechanismus einen Zylinder, der in einem Teil mit innerem Durchmesser eine Zylinderkammer bildet, eine in der Zylinderkammer vorgesehene Walze, eine Schaufel mit einer Spitze, die gegen eine äußere Umfangsfläche der Walze gedrückt wird und die Zylinderkammer in einen Ansaugbereich und einen Kompressionsbereich unterteilt, eine Welle, die in die Zylinderkammer eindringt und die Walze exzentrisch dreht, und ein Verschlusselement, das die Zylinderkammer verschließt, umfasst,
das erste Element ist die Klinge, und
das zweite Element ist die Walze.

5. Abgedichteter Kompressor nach Anspruch 4, wobei die Welle aus Gusseisen mit Kugelgraphit und das Verschlusselement aus Gusseisen mit Lamellengraphit hergestellt ist.

6. Kühlkreislaufvorrichtung mit dem abgedichteten Kompressor nach einem der Ansprüche 1 bis 5, einem Wärmestrahler, einem Expander und einem Wärmeabsorber.

## Revendications

1. Compresseur hermétique comprenant :
une partie de mécanisme de compression qui comprime un fluide frigorigène dans un récipient étanche ; et
une huile de réfrigérateur,
dans lequel la partie de mécanisme de compression comprend un premier élément et un deuxième élément coulissant l'un contre l'autre,
**caractérisé en ce que**
le premier élément est un substrat qui est fait d'un métal à base de fer et a un film de carbone de type diamant sur une surface du substrat, et
le deuxième élément est formé de fonte à laquelle a été ajouté du magnésium, a une quantité de précipitation de carbure sur une surface qui coulisse contre le premier élément inférieure ou égale à 5 % en proportion surfacique, et a une dureté Rockwell (HRC) supérieure ou égale à 40 mais inférieure ou égale à 55.

2. Compresseur hermétique selon la revendication 1, dans lequel l'huile de réfrigérateur ne contient pas d'additif extrême pression ou contient 0,5 % en poids ou moins d'un additif extrême pression.

3. Compresseur hermétique selon la revendication 1, dans lequel le fluide frigorigène ne contient pas de chlore.

4. Compresseur hermétique selon la revendication 1, dans lequel la partie de mécanisme de compression comprend un cylindre formant un compartiment de cylindre dans une partie de diamètre intérieur, un rouleau disposé dans le compartiment de cylindre, une lame ayant une pointe pressée contre une surface périphérique extérieure du rouleau et séparant le compartiment de cylindre entre une région d'aspiration et une région de compression, un arbre pénétrant dans le compartiment de cylindre et faisant tourner le rouleau de façon excentrique, et un élément de fermeture fermant le compartiment de cylindre,
le premier élément est la lame, et
le deuxième élément est le rouleau.

5. Compresseur hermétique selon la revendication 4, dans lequel l'arbre est formé de fonte à graphite sphéroïdal, et l'élément de fermeture est formé de fonte à graphite lamellaire.

6. Dispositif de cycle de réfrigération comprenant le compresseur hermétique de l'une quelconque des revendications 1 à 5, un radiateur, un détendeur, et un absorbeur de chaleur.
